# EUROPEAN PATENT SPECIFICATION

(11) **EP 1 317 140 B1**
(45) Date of publication and mention of the grant of the patent: **26.01.2011**
(21) Application number: 02258225.8
(22) Date of filing: 28.11.2002
(51) Int. Cl.: H04N 5/44

(54) **Broadcast data receiver with access to a UART**
Funkdatenempfänger mit UART-Zugang
Récepteur de donées diffusées avec accès à UART

(30) Priority: 29.11.2001 GB 0128556
(43) Date of publication of application: 04.06.2003
(73) Proprietor: Pace Plc, Saltaire Shipley West Yorkshire BD18 3LF (GB)
(72) Inventor: Coates, Timothy, Saltaire, Shipley BD18 3LF (GB)
(74) Representative: Wood, Graham

(56) References cited:
- EP-A- 0 759 593
- EP-A- 0 814 609
- WO-A-01/47129
- DE-A- 19 909 431
- GB-A- 2 384 925
- "SCART ADAPTER" ELEKTOR, CANTERBURY, GB, 1 September 1984 (1984-09-01), pages 952-955, XP002022879 ISSN: 0268-4519

## Description

The invention to which this application relates is a broadcast data receiver of the type which receives and processes data which is broadcast from a remote location. The processed data is used to generate video, audio and auxiliary displays for a viewer of, for example, a television set connected to the receiver or in which the receiver is integrated. The broadcast data receiver typically incorporates a universal asynchronous receiver transmitter (UART) in order to allow the receiver to function.

The UART is one of the functional components of the broadcast data receiver and the receiver is typically provided to be located in a user's premises for the generation of television programmes, and also, if the facility is provided, internet connections, e-mail and other functions such as home shopping. The operation of the receiver is typically controlled by software and from time to time the software can be updated via a communication connection and via the UART.

The broadcast data receiver, when the data is received from a remote location, decodes the same into video, audio or auxiliary data and, from the same, provides the generation of the television programmes to be displayed on the television screen. As the commercial demand for the digital data broadcast data receivers increases, so there is a need to keep the prices of components in the receiver to a minimum to reduce the cost, to the broadcaster, who typically promotes the receivers at a reduced price and ultimately to the user.

The UART is a component which needs to be accessed during manufacture of the broadcast data receiver for functional testing to take place at the place of manufacture, at consumer testing locations and also for software development or software downloads at a users premises and the like and therefore there is a need to provide external connections on the broadcast data receiver housing to allow the connection of external components to the UART in the said receiver, as and when required for the testing to occur, and for other data transmissions to the UART.

Conventionally, access to the UART is achieved via an RS232 transceiver integrated circuit provided in the receiver, typically on the main printed circuit board. This printed circuit board is connected to a 9-pin "D type" connector located on an external face of the broadcast data receiver housing, typically at the rear of the same. While this arrangement does allow access to be gained to the QUART, the provision of the integrated circuit is specifically and exclusively to allow connection to the UART. This provision uses up valuable printed circuit board space and rear panel connector space on the broadcast data receiver. An example of connecting devices in such a way, in a daisy-chain fashion, is disclosed in international application WO 01/47129. This is a particular problem as in most cases the broadcaster and end user of the receiver have no other requirement for the RS232 integrated circuit and especially the "D type" connection on the rear of the STB and so the same are redundant for large periods of time. Because of this, many receiver purchasers such as the broadcasters, and indeed the users, are reluctant to pay for this feature, believing that the same should, when provided, be paid for by the manufacturer as it is mainly for the manufacturer's purposes.

The aim of the present invention is to allow connection to the UART to be achieved without the need to provide a dedicated connector arrangement as is conventionally the case.

In a first aspect of the invention there is provided a broadcast data receiver, said broadcast data receiver provided with a housing, at least one SCART socket on the housing, including therein a SCART connector provided for connection with the same designated pins of the SCART socket to allow connections with external apparatus, and further including therein a UART and connection means to allow a further connection to be made from externally of the broadcast data receiver to the UART via the SCART connector to allow the transfer of data from externally of the broadcast data receiver to and/or from the UART and the connection means to the UART comprises at least two of the pins of the SCART connector, and characterised in that said at least two pins are used as the data input and output communication means for the UART to allow software to be downloaded to or updated on the broadcast data receiver.

Typically the SCART connector is already present in the broadcast data receiver in order to perform many other communication functions required by the broadcaster and manufacturer, and indeed user, and therefore the SCART connector is already provided as an integral part of the broadcast data receiver. Thus, the use of two of the pins of the SCART connector means that the conventional 9-pin D type connector and RS232 transceiver integrated circuit which are conventionally used need not be provided in the receiver.

Typically the two pins of the SCART connector which are used are selected to be those which have no, or are the least utilised pins for, existing data communication requirements from the broadcast data receiver.

Some test connection requirements, especially at the manufacturer's location, can require RS232 levels to be generated, in which case, in accordance with the invention these are generated externally of the broadcast data receiver, thereby allowing full factory functional and consumer testing and serial software downloads to be provided at the manufacturer location, the purchaser's warehouse location prior to delivery or indeed at the user's home location.

In one embodiment, the connection utilises the use of the P50 slow bus protocol pin, which is pin 10 of the SCART connector and another pin, typically pin 12 of the SCART connector.

Typically the pin 10 is chosen as the data input pin of the broadcast data receiver so that there is no contention or conflict with any external audio visual equipment that uses the protocol P50. Pin 12 is chosen as the data output pin as it is not currently defined in the International specification IEC933-1 for utilisation for any communication purposes with respect to a broadcast data receiver.

Typically, if the connection to the UART is used for the download or updating of software at the user's premises, then during the data transfer the UART connection is active for a relatively short period of time, a number of seconds, with the necessary characters transmitted to the broadcast data receiver via the UART. It is only during this time that there is any possibility of contention with other apparatus, if, for example, another function is, in the future, assigned to the pin 12 in the SCART specification. It is believed that due to the relatively short period of time that any data transfer occurs, then if any temporary contention may occur, it will be, in practical terms, irrelevant to the overall operation of the receiver. However, in one embodiment, to avoid this problem, resistors are provided in the printed circuit board for the SCART connection to prevent any such data contention from causing failure of any apparatus communications.

A specific embodiment of the invention is now described with reference to the accompanying diagrams, wherein:-
Figure 1 illustrates a typical SCART socket arrangement viewed from internally of a broadcast data receiver housing of the type provided to receive a SCART connector from externally of the receiver; and
Figure 2 illustrates one embodiment of a circuit diagram of the arrangement of the invention.

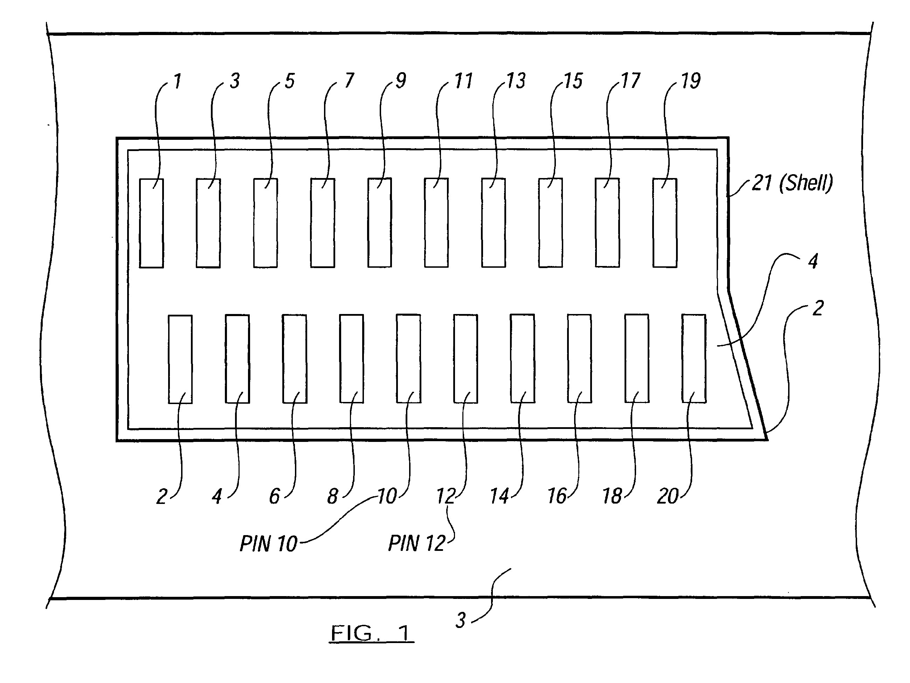

Referring firstly to Figure 1 there is illustrated a typical SCART connector socket 2, mounted on the broadcast data receiver housing 3, part of the rear face of which is shown, said connector having a series of pin sockets 4, each of which is allocated a number as shown in accordance with International specification EN50049-1:1997 SCART spec. A SCART connector is a physical and electrical interconnection between two pieces of audio-visual equipment, such as a television set and the broadcast data receiver. Each device has a female 21-pin connector interface. A cable with a male plug at each end is used to connect the device. (The 21^{st} pin is actually not a pin but the ground shield contact). Stereo audio, composite video, and control data signals can be provided in both directions. RGB video signals are input only. The pins and matching sockets are numbered and provided so that the socket receives the SCART connector with matching pin numbering, and therefore reference to pins applies equally to the socket arrangement.

The pins of particular interest in this case are pins and sockets numbered 10 and 12 of the SCART connector. In normal use external apparatus can be provided with a matching SCART male connector which allows the external apparatus to be connected to the broadcast data receiver SCART connector socket. In practice not all of the pins, and particularly not pin 12, are currently used and this therefore means that pin 12 is available.

Furthermore, pin 10 is also capable of being used due to the limited data transfer requirements of the same. Thus, pins and sockets 10, 12 are used and largely available for the external connections to the UART if required in accordance with the invention.

In practise, the connections to the UART can be made via factory connecting cables or, alternatively, via connecting cables connected in a user's premises which, in turn, allow connection to a telecommunication system for software downloads to be sent, typically by the service provider to the UART in the receiver and on the basis of the received software the operating system of the broadcast data receiver can be updated.

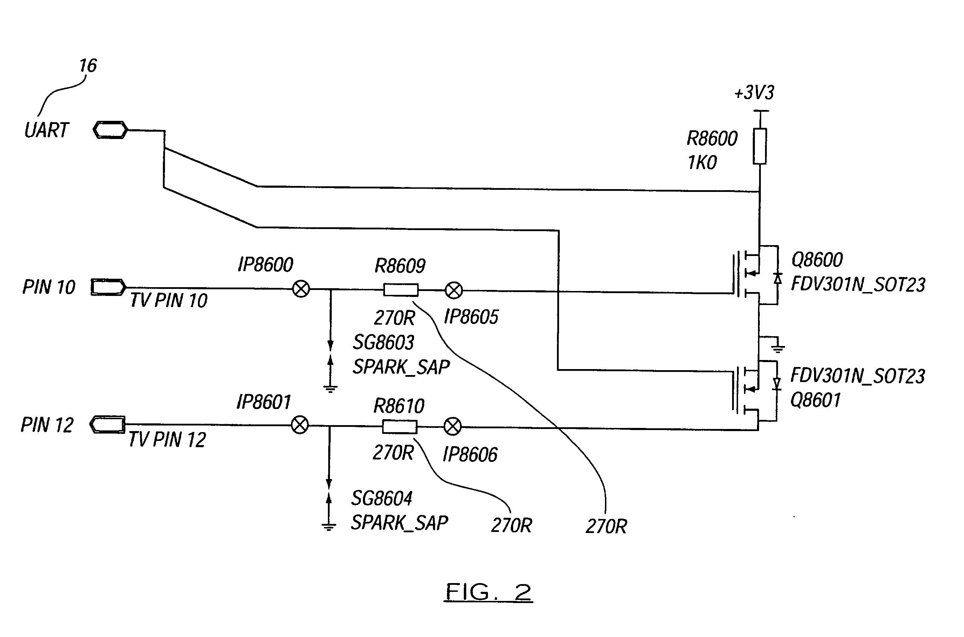

Figure 2 illustrates a preferred embodiment of the invention circuit utilised in the receiver housing wherein pin 10 and pin 12 of the SCART connector are illustrated, with pin 10 allowing the input of data to the UART 16 from external connections via the SCART connector and pin 12 allowing the output of data from the UART via the SCART connector, to monitoring or receiving apparatus externally of the receiver.

In practise, during tests in the manufacturer's facilities, there will be no other requirements for use of the pin 10 or pin 12 and therefore the tests can be performed without any risk of problems with other components or apparatus operation.

However, when the receiver has been purchased and installed in the user's premises, there is a possibility that if the UART is required to be accessed to allow the updating of software typically to update functions and/or operating systems of the receiver, the data is transmitted from a remote location and, there is a possibility that pin 12, although not currently used in the SCART specification for the receiver apparatus, could be used in the future. As such, there is a potential for data conflict or error if other apparatus is using the pin 12 for data transfer at the same time that the required software update is made. In practise, it is unlikely that this will happen because the software update is usually transmitted for a relatively short period of time, such as, for example 9 seconds. However, in order to avoid the possibility of conflict, two resistors 270R are provided as shown in Figure 2. These resistors stop the Field Effect Transistor (FET) or any other component connected to the broadcast data receiver from failing while maintaining the connection to the UART via the SCART connector thereby allowing the updating of software to occur until completed and the operation of any external component to occur.

The same problem does not occur with pin 10 as it is already known to be able to use pin 10 in accordance with project P50, to allow data to be transferred via the same even if the pin is being used for other purposes.

There is therefore achieved a means of maintaining connections and the capability to connect with the UART in the broadcast data receiver but to do so without the need to provide additional connectors which are only specifically for that purpose. This represents a significant saving per broadcast data receiver, typically 25p and frees up additional space on the printed circuit board and on the external surface of the broadcast data receiver.

## Claims

1. A method of using a broadcast data receiver,
said broadcast data receiver provided with a housing (3), at least one SCART socket (2) on the housing (3), including therein a SCART connector provided for connection with the same designated pins (4) of the SCART socket (2) to allow connections with external apparatus, and further including therein a UART and connection means to allow a further connection to be made from externally of the broadcast data receiver to the UART via the SCART connector to allow the transfer of data from externally of the broadcast data receiver to and/or from the UART and the connection means to the UART comprises at least two of the pins of the SCART connector, and
**characterised in that** said at least two pins are used as the data input and output communication means for the UART to allow software to be downloaded to or updated on the broadcast data receiver.

2. A method of using a broadcast data receiver according to claim 1 **characterised in that** the SCART connector performs communication functions required by the broadcaster of data to the broadcast data receiver and/or manufacturer of the broadcast data receiver and/or user.

3. A method of using a broadcast data receiver according to claim 1 **characterised in that** the two pins of the SCART connector which are used are selected to be those which have no, or are the least utilised pins for, existing data communication requirements.

4. A method of using a broadcast data receiver according to claim 1 **characterised in that** any RS232 levels which are required to be generated are generated externally of the broadcast data receiver and connected to the broadcast data receiver via the SCART connector.

5. A method of using a broadcast data receiver according to any of the preceding claims **characterised in that** pins 10 and 12 of the SCART connector are utilised for connection with the UART when required.

6. A method of using a broadcast data receiver according to claim 5 **characterised in that** pin 10 is chosen as the data input pin to the broadcast data receiver UART and pin 12 is chosen as the data output pin.

7. A method of using a broadcast data receiver according to any of the preceding claims **characterised in that** the connection to the UART is used for the download of data to update the software operating system when the broadcast data receiver is at the users premises.

8. A method of using a broadcast data receiver according to any of the preceding claims **characterised in that** a control circuit within the broadcast data receiver is provided for the connection from the SCART socket (2) to the UART.

9. A method of using a broadcast data receiver according to claim 8 **characterised in that** the circuit includes at least one resistor provided on each of the connection paths from and to pins 10 and 12 respectively.

## Patentansprüche

1. Verfahren zur Verwendung eines Funkdatenempfängers,
wobei der genannte Funkdatenempfänger mit einem Gehäuse (3) versehen ist, wobei sich wenigstens eine SCART-Buchse (2) an dem Gehäuse (3) befindet, Bereitstellen eines SCART-Steckers darin, der zur Verbindung mit den gleichen zugeordneten Stiften (4) der SCART-Buchse (2) bereitgestellt wird, um Verbindungen mit externen Vorrichtungen zu ermöglichen, und ferner Bereitstellen eines UART und einer Verbindungseinrichtung darin,
um die Herstellung einer weiteren Verbindung von außerhalb des Funkdatenempfangers über den SCART-Stecker zu dem UART zu ermöglichen, um die Datenübertragung von außerhalb des Funkdatenempfängers zu und/oder von dem UART zu ermöglichen und die Verbindungseinrichtung zu dem UART wenigstens zwei der Stifte des SCART-Steckers umfasst, und
**dadurch gekennzeichnet, dass** die genannten wenigstens zwei Stifte als Kommunikationsvorrichtung zur Dateneingabe und - ausgabe für den UART verwendet werden, damit Software in den Funkdatenempfänger heruntergeladen oder in ihm aktualisiert werden kann.

2. Verfahren zur Verwendung eines Funkdatenempfängers nach Anspruch 1, **dadurch gekennzeichnet, dass** der SCART-Stecker von dem Sender von Daten an den Funkdatenempfänger und/oder dem Hersteller des Funkdatenemptängers und/oder dem Benutzer erforderte Kommununikationsfunktionen durchführt.

3. Verfahren zur Verwendung eines Funltdatenempfängers nach Anspruch 1, **dadurch gekennzeichnet, dass** die zwei Stifte des SCART-Steckers, die verwendet werden, als diejenigen ausgewählt werden, die keine bestehenden Datenkommunikationsanforderungen haben oder die am wenigsten genutzten Stifte für bestehende Datenkommunikationsanforderungen sind.

4. Verfahren zur Verwendung eines Funkdatenempfängers nach Anspruch 1, **dadurch gekennzeichnet, dass** RS232-Ebenen, die erzeugt werden müssen, außerhalb des Funkdatenempfängers erzeugt werden und über den SCART-Stecker mit dem Funkdatenempfänger verbunden werden.

5. Verfahren zur Verwendung eines Funkdatenempfängers nach einem der vorhergehenden Ansprüche, **dadurch gekennzeichnet, dass** Stifte 10 und 12 des SCART-Steckers erforderlichenfalls zur Verbindung mit dem UART genutzt werden.

6. Verfahren zur Verwendung eines Funkdatenempfängers nach Anspruch 5, **dadurch gekennzeichnet, dass** Stift 10 als Dateneingabestift für den UART des Funksendeempfängers gewählt wird und Stift 12 als Datenausgabestift gewählt wird.

7. Verfahren zur Verwendung eines Funkdatenempfängers nach einem der vorhergehenden Ansprüche, **dadurch gekennzeichnet, dass** die Verbindung zu dem UART zum Herunterladen von Daten zur Aktualisierung des Software-Betriebssystems verwendet wird, wenn der Funkdatenempfänger sich am Standort des Benutzers befindet.

8. Verfahren zur Verwendung eines Funkdatenempfängers nach einem der vorhergehenden Ansprüche, **dadurch gekennzeichnet, dass** für die Verbindung von der SCART-Buchse (2) zu dem UART ein Steuerschaltkreis innerhalb des Funkdatenempfängers bereitgestellt wird.

9. Verfahren zur Verwendung eines Funkdatenempfängers nach Anspruch 8, **dadurch gekennzeichnet, dass** der Schaltkreis wenigstens einen Widerstand aufweist, der an jedem der Verbindungswege von und zu dem Stift 10 bzw. 12 bereitgestellt ist.

## Revendications

1. Procédé d'utilisation d'un récepteur de données diffusées,
ledit récepteur de données diffusées étant doté d'un logement (3), d'au moins une prise SCART (2) sur le logement (3), incluant dans celui-ci un connecteur SCART qui est prévu en vue d'un raccordement avec les mêmes broches désignées (4) de la prise SCART (2) pour permettre des connexions avec un appareil externe, et incluant en outre dans celui-ci un UART et des moyens de connexion pour permettre de réaliser une connexion supplémentaire à partir de l'extérieur du récepteur de données diffusées vers l'UART par l'intermédiaire du connecteur SCART pour permettre le transfert de données depuis l'extérieur du récepteur de données diffusées vers l'UART et/ou en provenance de ce dernier, et les moyens de connexion vers l'UART comprenant au moins deux des broches du connecteur SCART, et
**caractérisé en ce que** lesdites au moins deux broches sont utilisées en tant que moyens de communication d'entrée et de sortie de données pour l'UART afin de permettre le téléchargement de logiciel vers le récepteur de données diffusées ou la mise à jour du logiciel sur le récepteur de données diffusées.

2. Procédé d'utilisation d'un récepteur de données diffusées selon la revendication 1, **caractérisé en ce que** le connecteur SCART assure les fonctions de communication requises par l'organisme de radio-télédiffusion pour des données à l'intention du récepteur de données diffusées et/ou du fabricant du récepteur de données diffusées et/ou de l'utilisateur.

3. Procédé d'utilisation d'un récepteur de données diffusées selon la revendication 1, **caractérisé en ce que** les deux broches du connecteur SCART qui sont utilisées sont sélectionnées pour être celles qui n'ont pas d'exigences existantes en termes de communication de données, ou qui sont les broches les moins utilisées pour des exigences existantes en termes de communication de données.

4. Procédé d'utilisation d'un récepteur de données diffusées selon la revendication 1, **caractérisé en ce que** n'importe quel niveau RS232 ayant besoin d'être généré est génère à l'extérieur du récepteur de données diffusées et connecté au récepteur de données diffusées par l'intermédiaire du connecteur SCART.

5. Procède d'utilisation d'un récepteur de données diffusées selon l'une quelconque des revendications précédentes, **caractérisé en ce que** les broches 10 et 12 du connecteur SCART sont utilisées pour une connexion avec l'UART si besoin est.

6. Procédé d'utilisation d'un récepteur de données diffusées selon la revendication 5, **caractérisé en ce que** la broche 10 est choisie en tant que broche d'entrée de données vers l'UART du récepteur de données diffusées et la broche 12 est choisie en tant broche de sortie de données.

7. Procède d'utilisation d'un récepteur de données diffusées selon l'une quelconque des revendications précédentes, **caractérisé en ce que** la connexion vers l'UART est utilisée pour le téléchargement de données afin de mettre à jour le système d'exploitation logiciel lorsque le récepteur de données diffusées se trouve dans les locaux de l'utilisateur.

8. Procédé d'utilisation d'un récepteur de données diffusées selon l'une quelconque des revendications précédentes, **caractérisé en ce qu'**un circuit de commande est prévu au sein du récepteur de données diffusées afin d'assurer la connexion depuis la prise SCART (2) vers l'UART.

9. Procédé d'utilisation d'un récepteur de données diffusées selon la revendication 8, **caractérisé en ce que** le circuit englobe au moins une résistance qui est montée sur chacun des trajets de connexion provenant des broches 10 et 12, et s'y rendant, respectivement.
